# EUROPÄISCHE PATENTSCHRIFT

(11) **EP 2 112 755 B1**
(45) Veröffentlichungstag und Bekanntmachung des Hinweises auf die Patenterteilung: **29.08.2012**
(21) Anmeldenummer: 09158240.3
(22) Anmeldetag: 20.04.2009
(51) Int. Cl.: H02K 41/02, H02K 11/00

(54) **Linearmotor**
Linear motor
Moteur linéaire

(30) Priorität: 22.04.2008 EP 08154971
(43) Veröffentlichungstag der Anmeldung: 28.10.2009
(73) Patentinhaber: NTI AG, 8957 Spreitenbach (CH)
(72) Erfinder: Rohner, Ronald, Dr., 8967 Widen (CH); Hitz, Marco, Dr., 3213 Kleinbösingen (CH); Ausderau, Daniel, Dr., 8500 Frauenfeld (CH)
(74) Vertreter: Bohest AG

(56) Entgegenhaltungen:
- FR-A- 2 387 435
- GB-A- 1 307 833
- GB-A- 2 291 937
- US-A- 5 949 161

## Beschreibung

Die vorliegende Erfindung betrifft einen Linearmotor gemäss dem Oberbegriff des unabhängigen Patentanspruchs.

Ein Linearmotor umfasst typischerweise einen Stator, einen linear beweglichen Läufer und eine Ansteuer- und Kontrollelektronik. Um den Läufer zu bewegen, wird in der Regel entweder der Stator oder der Läufer mit bestrombaren Wicklungen, sog. Antriebswicklungen, versehen und entsprechend der Läufer oder der Stator mit einer permanentmagnetischen Erregung. Die permanentmagnetische Erregung wird zumeist durch diskrete Permanentmagnete erzeugt, die in einer bestimmten Art und Weise angeordnet sind. Ob die Permanentmagnete im Stator oder im Läufer und demzufolge die bestrombaren Wicklungen im Läufer oder im Stator angeordnet sind, richtet sich nach dem gewünschten Einsatzgebiet bzw. den dortigen Gegebenheiten.

Bei Linearmotoren unterscheidet man zwischen Linearmotoren mit innenliegendem Läufer, einem sogenannten Innenläufer, und Linearmotoren mit aussenliegendem Läufer, einem sogenannten Aussenläufer.

Bei einem Linearmotor mit Innenläufer umfasst der Läufer im wesentlichen Permanentmagnete, welche ein Magnetfeld mit wechselnder Polarität aufbauen. Eine übliche Ausführungsform eines derartigen Läufers besteht aus einem dünnen Metallrohr, z. B. aus Chromstahl, dessen Wanddicke einige Zehntelmillimeter beträgt, in welchem scheibenförmige axial polarisierte Neodymmagnete eingepresst sind, zwischen denen gegebenenfalls noch Abstandshalter aus magnetischen oder nichtmagnetischen Materialien liegen.

Der Stator eines Linearmotors mit Innenläufer umfasst in der Regel einen Wickelkörper, der sowohl die Antriebswicklung trägt als auch als Gleitlager für den Läufer dient. Der Abstand zwischen Läufer und Wickelkörper wird so klein wie möglich gehalten, typischerweise 1/10 mm (Konstruktionsluftspalt). Der Wickelkörper weist eine Wanddicke im Gleitlagerbereich auf, die so dünn wie möglich gewählt wird, damit der Spalt (quasi ein Luftspalt) zwischen Antriebswicklung und Läufer nicht unnötig gross wird und infolgedessen die durch die Antriebswicklung erzeugte Magnetkraft nicht unnötig reduziert wird. Die Wanddicke im Gleitlagerbereich beträgt typischerweise weniger als ein Millimeter und ist vor allem von der Grösse des Linearmotors abhängig. Denkbar ist auch ein Aufbau der Antriebswicklung aus mehreren Wickelpaketen, sogenannten Luftspulen, welche aneinandergereiht und anschliessend vergossen oder verklebt werden, so dass sich eine schützende Kunststoffschicht um die Antriebswicklung legt. Aus produktionstechnischen Gründen wird aber zumeist ein diskreter Wickelkörper benutzt, auf welchen die Wicklungen gewickelt oder als Pakete geschoben werden.

In den meisten Anwendungsfällen weist das Gleitlager eine Lebensdauer auf, die diejenige vom Linearmotor an sich bei weitem übersteigt. Von Nachteil können aber Querkräfte auf den Läufer sein, welche je nach Wanddicke des Wickelkörpers im Gleitlagerbereich Abnutzungen des Gleitlagers zur Folge haben können. Dies kann zu einem Durchtritt des Läufers durch den Wickelkörper im Gleitlagerbereich führen. Ein solcher Durchtritt führt einerseits zu einem Totalausfall des Linearmotors, noch schwerwiegender kann aber das daraus resultierende Sicherheitsproblem sein, indem der Läufer in Berührung mit der Antriebswicklung geraten kann. Die Antriebswicklung umfasst zwar isolierte Wicklungsdrähte, typischerweise mit einer Lackisolationsschicht, diese ist aber nur wenige Hunderstelmillimeter dick. Somit kann die Lackisolationsschicht in kürzester Zeit abgeschabt werden und der Läufer steht anschliessend in Kontakt mit der stromführenden Antriebswicklung, was es unbedingt zu vermeiden gilt. Da es sich hierbei um einen schleichenden Vorgang handelt, kann der Läufer bereits zeitweise das Potential der Antriebswicklung aufweisen, obwohl der Linearmotor noch funktionstüchtig ist. Dies stellt ein ernsthaftes Sicherheitsproblem dar, weil die Antriebswicklung des Linearmotors für grosse Lasten mit grossen Strömen und hohen Spannungen dimensioniert werden muss, wobei solche grossen Ströme und hohe Spannungen für den Menschen lebensgefährlich sein können. Gemäss dem Stand der Technik wird vorgeschlagen, den Läufer zu erden. Dies ist aber umständlich, aufwändig in der Herstellung und wartungsintensiv im Betrieb. Andere Möglichkeiten sind eine separate Spannungsmessung des Läufers - ebenfalls aufwändig - oder eine separate Führung des Läufers ausserhalb des Wickelkörpers vorzusehen, was die Dimensionen des Linearmotors unnötig vergrössert und auch den maximal möglichen Hub des Läufers begrenzt.

Der vorliegenden Erfindung liegt daher die Aufgabe zugrunde, einen Linearmotor mit einem Stator und einem Läufer vorzuschlagen, welcher die genannten Nachteile nicht aufweist und insbesondere vermeidet, dass das oben genannte Sicherheitsproblem auftauchen kann, ohne dass dazu der Läufer geerdet werden muss.

Diese Aufgabe wird durch den erfindungsgemässen Linearmotor gelöst, wie er im unabhängigen Patentanspruch 1 definiert ist. Vorteilhafte Ausführungsvarianten des erfindungsgemässen Linearmotors ergeben sich aus den abhängigen Patentansprüchen.

Insbesondere umfasst der erfindungsgemässe Linearmotor einen Stator und einen Läufer, wobei der Stator einen Wickelkörper und eine auf dem Wickelkörper angeordnete Antriebswicklung aufweist. Weiterhin sind Mittel zum Verhindern eines Kontakts zwischen Antriebswicklung und Läufer bei einem Durchtritt des Läufers durch den Wickelkörper vorhanden. Auf diese Weise kann verhindert werden, dass ein Durchtritt des Läufers zu einem Sicherheitsproblem werden kann, wenn nämlich Läufer mit der stromführenden Antriebswicklung in Kontakt gerät und somit dasselbe Potential wie die Antriebswicklung aufweist. Eine aufwändige Erdung des Läufers kann somit entfallen, wodurch ein solcher Schutz des Linearmotors kostengünstig hergestellt werden kann.

Bei einem Ausführungsbeispiel des erfindungsgemässen Linearmotors umfassen die Mittel zum Verhindern eines Kontakts zwischen Antriebswicklung und Läufer mindestens eine Sensorwicklung, welche zwischen Wickelkörper und Antriebswicklung angeordnet ist. Diese Sensorwicklung wird von der Ansteuer- und Kontrollelektronik mit einer geringen und ungefährlichen Kontrollspannung versorgt, wobei bei einem Durchtritt des Läufers durch den Wickelkörper und anschliessender Durchtrennung der Sensorwicklung dies von der Ansteuer- und Kontrollelektronik detektiert wird. Ist dies der Fall, wird die Spannung, die an den Wicklungsdrähten der Antriebswicklung anliegt, durch die Ansteuer- und Kontrollelektronik abgeschaltet. Der Linearmotor ist zwar dann nicht mehr funktionstüchtig, es kann aber verhindert werden, dass der Läufer dasselbe Potential wie die Antriebswicklung führt. Da die mindestens eine Sensorwicklung einen geringen Strom führt, kann sie mit einem sehr geringen Drahtdurchmesser auskommen, typischerweise beträgt dieser Drahtdurchmesser weniger als 1/10 mm. Sie nimmt somit wenig Raum in Anspruch, was sich günstig auf die Grösse des gesamten Spalts zwischen der Antriebswicklung und dem Läufer und somit günstig auf die von der Antriebswicklung erzeugte Magnetkraft auswirkt.

Bei einem Ausführungsbeispiel des erfindungsgemässen Linearmotors umfasst die mindestens eine Sensorwicklung genau eine Sensorwicklung, welche einlagig gewickelt ist und sich in axialer Richtung erstreckt. Der Platzbedarf einer solchen einlagigen, sich in axialer Richtung erstreckenden Sensorwicklung ist sehr gering, was sich günstig auf die Grösse des gesamten Spalts zwischen der Antriebswicklung und dem Läufer und somit günstig auf die von der Antriebswicklung erzeugte Magnetkraft auswirkt.

Bei einem weiteren Ausführungsbeispiel des erfindungsgemässen Linearmotors umfasst die mindestens eine Sensorwicklung eine erste und eine zweite Sensorwicklung, wobei die erste und die zweite Sensorwicklung jeweils einlagig gewickelt ist und sich in axialer Richtung erstreckt, und wobei die Wicklungsdrähte der ersten und zweiten Sensorwicklung in axialer Richtung alternierend angeordnet sind. Zwei separate Sensorwicklungen erlauben eine bessere Detektion eines Durchtritts des Läufers durch den Wickelkörper, da sowohl eine Unterbrechung von einer der beiden Sensorwicklungen oder von beiden Sensorwicklungen, als auch ein Kurzschluss zwischen den beiden Sensorwicklungen, hervorgerufen durch den durchgetretenen Läufer, detektiert werden können. Durch die einlagige sich in axialer Richtung erstreckende Wicklung der beiden Sensorwicklungen mit alternierender Anordnung der Wicklungsdrähte ist gleichzeitig der Spalt zwischen der Antriebswicklung und dem Läufer gering, was sich günstig auf die von der Antriebswicklung erzeugte Magnetkraft auswirkt.

Bei einem weiteren Ausführungsbeispiel des erfindungsgemässen Linearmotors umfasst die mindestens eine Sensorwicklung eine erste und eine zweite Sensorwicklung, wobei die erste und die zweite Sensorwicklung jeweils einlagig gewickelt ist und sich in axialer Richtung erstreckt, und wobei die beiden Sensorwicklungen koaxial zueinander angeordnet sind. Zwei separate Sensorwicklungen erlauben erneut eine gute Detektion eines Durchtritts des Läufers durch den Wickelkörper, da sowohl eine Unterbrechung von einer der beiden Sensorwicklungen oder von beiden Sensorwicklungen, als auch ein Kurzschluss zwischen den beiden Sensorwicklungen, hervorgerufen durch den durchgetretenen Läufer, detektiert werden können. Durch eine koaxiale jeweils einlagige Anordnung der beiden Sensorwicklungen wird zwar die radiale Baugrösse der Sensorwicklungen insgesamt grösser als bei einer einlagigen Sensorwicklung. Andererseits wird aber eine grössere Sicherheit einer Nichtkontaktierung der stromführenden Antriebswicklung durch den Läufer erreicht.

Bei einem weiteren Ausführungsbeispiel des erfindungsgemässen Linearmotors ist zwischen der mindestens einen Sensorwicklung und der Antriebswicklung eine Schutzschicht gegen mechanische Beschädigung der Antriebswicklung angeordnet. Während die Sensorwicklung(en) die Detektion eines Durchtritt des Läufers sicherstellt, erhöht die Schutzschicht gegen mechanische Beschädigung zusätzlich die Sicherheit einer Nichtkontaktierung der stromführenden Antriebswicklung durch den Läufer. Vorteilhaft ist dabei auch, dass hier ein sicheres Detektieren eines Durchtritts des Läufers möglich ist, weil die Sensorwicklung durchtrennt worden ist, aber die Schutzschicht einen Kontakt des Läufers mit der Antriebswicklung verhindert. Speziell im Falle von zwei Sensorwicklungen und einer Schutzschicht kann sowohl eine allfällige Unterbrechung von einer oder von beiden Sensorwicklungen detektiert werden als auch ein Kurzschluss zwischen den beiden Sensorwicklungen, und die Schutzschicht verhindert einen Kontakt des Läufers mit der Antriebswicklung.

Bei einer Weiterbildung des zuletzt genannten Ausführungsbeispiels des erfindungsgemässen Linearmotors umfasst die Schutzschicht eine flexible Printplatte, auf der die mindestens eine Sensorwicklung aufgebracht ist, und insbesondere die mindestens eine Sensorwicklung in Form von Leiterbahnen auf der flexiblen Printplatte angeordnet ist. Eine flexible Printplatte mit aufgebrachten Leiterbahnen, z. B. aus Kupfer, ist eine einfache und wenig aufwändige Lösung um sowohl die Schutzschicht gegen mechanische Beschädigung, als auch die Sensorwicklung zu realisieren.

Wie bereits erwähnt, kann der Läufer sowohl ein Innenläufer, als auch ein Aussenläufer sein. Gemäss eines speziellen Ausführungsbeispiels des erfindungsgemässen Linearmotors ist der Läufer jedoch ein Innenläufer.

Bei einem weiteren vorteilhaften Ausführungsbeispiel des erfindungsgemässen Linearmotors umfasst die mindestens eine Sensorwicklung eine erste und eine zweite Sensorwicklung, wobei die erste und die zweite Sensorwicklung axial gegenüberliegend ausserhalb des Wickelkörpers angeordnet sind. Eine Anordnung der ersten und zweiten Sensorwicklung ausserhalb des Wickelkörpers verhindert einen Kontakt zwischen Antriebswicklung und Läufer bei einem Durchtritt des Läufers durch den Wickelkörper, da die Lagerung des Läufers ausserhalb des Wickelkörpers erfolgt. Diese Anordnung trennt zwar grundsätzlich die Lagerung des Läufers vom Wickelkörper und auch vom Stator, bedingt allerdings, dass die Läuferenden niemals ganz in den Stator hinein gelangen dürfen, da andernfalls eine einwandfreie Lagerung des Läufers nicht mehr gegeben ist, sodass der maximale Hub des Läufers bei diesem Ausführungsbeispiel begrenzt ist.

Im Folgenden wird der erfindungsgemässe Linearmotor unter Bezugnahme auf die beigefügten Zeichnungen anhand von fünf Ausführungsbeispielen detaillierter beschrieben. Es zeigen:
- Fig. 1: einen Längsschnitt durch ein erstes Ausführungsbeispiel eines erfindungsgemässen Linearmotors mit einer Sensorwicklung;
- Fig. 2: den Ausschnitt II des Ausführungsbeispiels aus Fig. 1 mit einem Läufer, der durch den Wickelkörper durchgetreten ist;
- Fig. 3: den Ausschnitt II aus Fig. 2 mit durchtrennter Sensorwicklung (ohne Läufer);
- Fig. 4: einen Längsschnitt durch ein zweites Ausführungsbeispiel eines erfindungsgemässen Linearmotors mit einer ersten und einer zweiten Sensorwicklung, die alternierend angeordnet sind;
- Fig. 5: den Ausschnitt V des Ausführungsbeispiels aus Fig. 4 mit einem Läufer, der durch den Wickelkörper durchgetreten ist;
- Fig. 6: den Ausschnitt V aus Fig. 5 mit durchtrennter ersten Sensorwicklung (ohne Läufer);
- Fig. 7: den Ausschnitt V aus Fig. 5 mit einem Kurzschluss zwischen der ersten und der zweiten Sensorwicklung (ohne Läufer);
- Fig. 8: einen Längsschnitt durch ein drittes Ausführungsbeispiel eines erfindungsgemässen Linearmotors mit einer ersten und einer zweiten Sensorwicklung, die koaxial zueinander angeordnet sind;
- Fig. 9: den Ausschnitt IX des Ausführungsbeispiels aus Fig. 8 mit einem Läufer, der durch den Wickelkörper durchgetreten ist;
- Fig. 10: den Ausschnitt IX aus Fig. 9 mit durchtrennter ersten Sensorwicklung (ohne Läufer);
- Fig. 11: den Ausschnitt IX aus Fig. 9 mit einem Kurzschluss zwischen der ersten und der zweiten Sensorwicklung (ohne Läufer);
- Fig. 12: eine Schnittdarstellung eines Ausschnitts aus einem vierten Ausführungsbeispiel eines erfindungsgemässen Linearmotors mit einer Sensorwicklung und einer Schutzschicht gegen mechanische Beschädigung; und
- Fig. 13: einen Längsschnitt durch ein fünften Ausführungsbeispiel eines erfindungsgemässen Linearmotors mit einer ersten und einer zweiten Sensorwicklung, die axial einander gegenüberliegend ausserhalb des Wickelkörpers angeordnet sind;

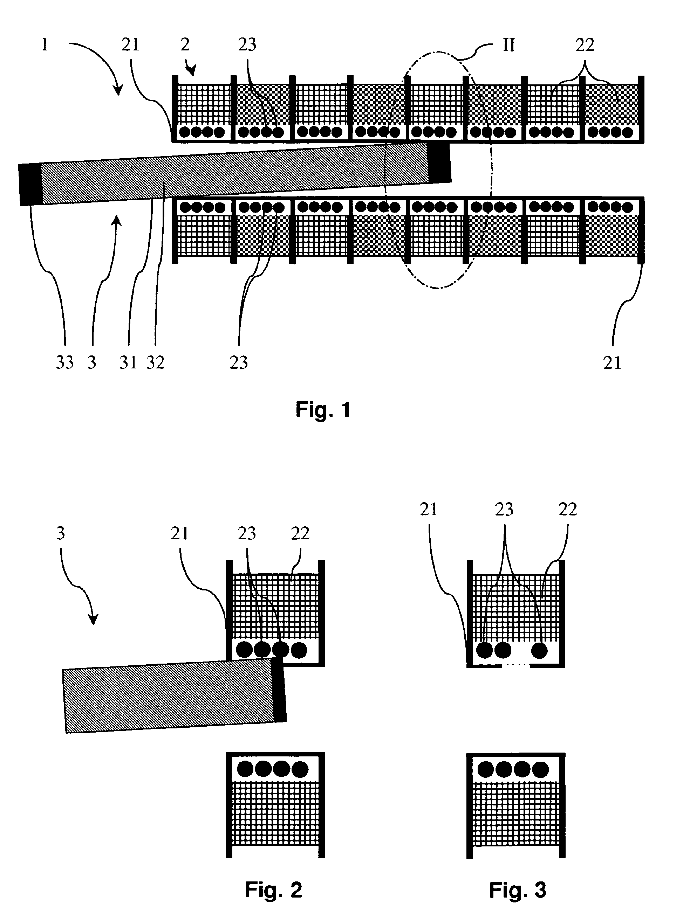

Bei dem in den Fig. 1-3 dargestellten ersten Ausführungsbeispiel umfasst der erfindungsgemässe Linearmotor 1 einen Stator 2 und einen Läufer 3. Der Stator 2 umfasst einen Wickelkörper 21 und eine darauf aufgebrachte Antriebswicklung 22. Zwischen dem Wickelkörper 21 und der Antriebswicklung 22 befindet sich eine Sensorwicklung 23, die einlagig gewickelt ist und sich in axialer Richtung über die ganze Länge des Wickelkörpers 21 erstreckt.

Der Läufer 3 umfasst ein dünnes Metallrohr 31, z. B. aus Chromstahl, dessen Wanddicke einige Zehntelmillimeter beträgt, und in dessen Innenraum 32 scheibenförmige axial polarisierte Neodymmagnete eingepresst sind, zwischen denen gegebenenfalls noch Abstandshalter aus magnetischen oder nichtmagnetischen Materialien angeordnet sind. Die Antriebswicklung 22 wird durch eine Ansteuer- und Kontrollelektronik (nicht gezeigt) derart angesteuert, dass der Läufer 3 im Stator 2 in axialer Richtung bewegt werden kann. Des weiteren umfasst der Läufer 3 Läuferenden 33, die denselben Aussendurchmesser wie das Metallrohr 31 aufweisen.

Der Wickelkörper 21 dient nicht nur als Träger für die Antriebswicklung 22 und die Sensorwicklung 23, sondern auch als Gleitlager für den Läufer 3. Der Abstand zwischen Läufer und Wickelkörper wird so klein wie möglich gehalten, und beträgt typischerweise z. B. 1/10 mm. Der Wickelkörper 21 weist im Gleitlagerbereich eine Wanddicke auf, die so dünn wie möglich gewählt wird, um eine durch die Antriebswicklung 22 erzeugte Magnetkraft nicht unnötig zu reduzieren. Die Wanddicke im Gleitlagerbereich beträgt typischerweise weniger als ein Millimeter und ist vor allem von der Grösse des Linearmotors abhängig. Der Wickelkörper 21 wird aus einem Kunststoff gefertigt, der über eine gute Gleiteigenschaft verfügt, so dass das Lager eine lange Lebensdauer aufweist.

Querkräfte auf den Läufer 3 können je nach Wanddicke des Wickelkörpers 21 im Gleitlagerbereich Abnutzungen des Gleitlagers zur Folge haben. Dies kann im Extremfall zu einem Durchtritt des Läufers 3 durch den Wickelkörper 21 im Gleitlagerbereich führen. Bei einem solchen Durchtritt trifft der Läufer 3 auf die Sensorwicklung 23 (siehe Fig. 2), welche einlagig gewickelt zwischen Wickelkörper 21 und Antriebswicklung 22 angeordnet ist. Bevor nun der Läufer 3 mit der Antriebswicklung 22 in Kontakt gerät, wird die Sensorwicklung 23 an mindestens einer Stelle durchtrennt (siehe Fig. 3). Eine solche Durchtrennung der Sensorwicklung 23 wird von der Ansteuer- und Kontrollelektronik detektiert und bewirkt ein Ausschalten der Antriebswicklung 22. Der Linearmotor 1 ist zwar dann nicht mehr funktionstüchtig, es wird aber vermieden, dass der Läufer 3 in Berührung mit der Antriebswicklung 22 geraten kann. Somit kann verhindert werden, dass der Läufer 3 das Potential der Antriebswicklung 22 aufweist, was je nach Strom und Spannung der Antriebswicklung 22 gefährlich sein könnte.

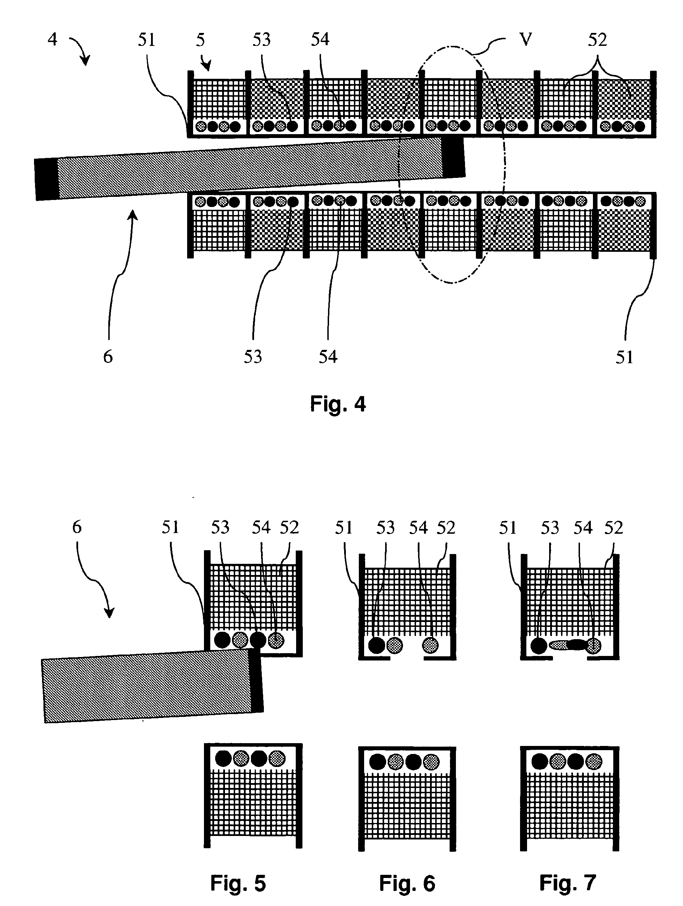

Bei dem in den Fig. 4-7 dargestellten zweiten Ausführungsbeispiel umfasst der erfindungsgemässe Linearmotor 4 einen Stator 5 und einen Läufer 6. Der Stator 5 umfasst einen Wickelkörper 51 und eine darauf aufgebrachte Antriebswicklung 52. Zwischen dem Wickelkörper 51 und der Antriebswicklung 52 befinden sich eine erste Sensorwicklung 53 und eine zweite Sensorwicklung 54, die jeweils einlagig gewickelt sind und sich in axialer Richtung über die ganze Länge des Wickelkörpers 51 erstrecken. Die Wicklungsdrähte der ersten 53 und zweiten 54 Sensorwicklung sind in axialer Richtung alternierend angeordnet.

Bei einem Durchtritt des Läufers 6 durch den Wickelkörper 51 (siehe Fig. 5) trifft der Läufer 6 auf mindestens eine der ersten 53 und zweiten 54 Sensorwicklung. Bevor nun der Läufer 6 mit der Antriebswicklung 52 in Kontakt gerät, wird mindestens entweder die erste Sensorwicklung 53 oder die zweite Sensorwicklung 54 oder beide an mindestens einer Stelle durchtrennt (siehe Fig. 6). Ebenfalls möglich ist ein Kurzschluss zwischen der ersten 53 und der zweiten 54 Sensorwicklung (siehe Fig. 7). Eine solche Durchtrennung der ersten 53 oder der zweiten 54 Sensorwicklung oder ein Kurzschluss zwischen der ersten 53 und der zweiten 54 Sensorwicklung wird von der Ansteuer- und Kontrollelektronik detektiert und bewirkt ein Ausschalten der Antriebswicklung 52. Der Linearmotor 4 ist zwar dann nicht mehr funktionstüchtig, es wird aber vermieden, dass der Läufer 6 in Berührung mit der Antriebswicklung 52 geraten kann.

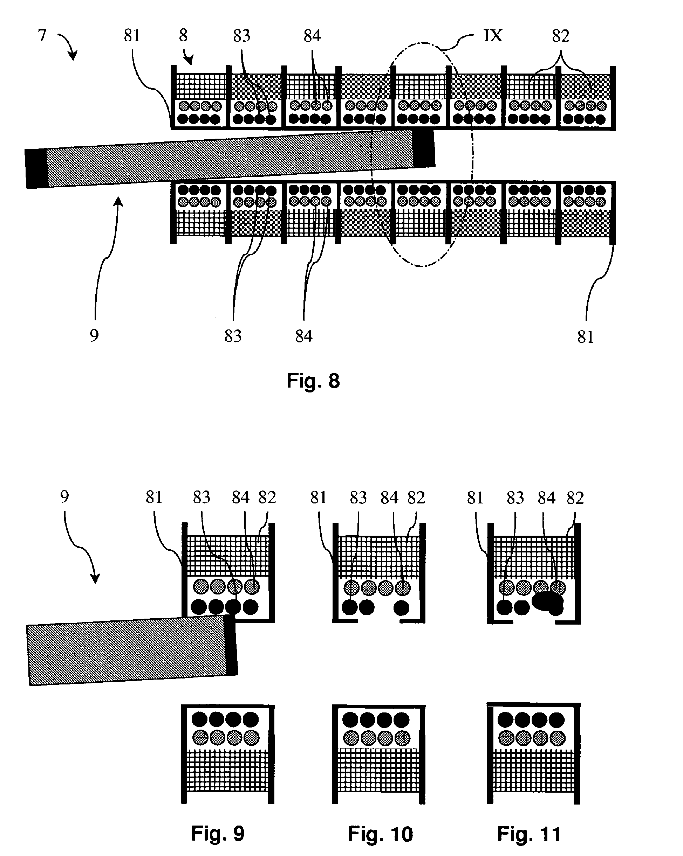

Bei dem in den Fig. 8-11 dargestellten dritten Ausführungsbeispiel umfasst der erfindungsgemässe Linearmotor 7 einen Stator 8 und einen Läufer 9. Der Stator 8 umfasst einen Wickelkörper 81 und eine darauf aufgebrachte Antriebswicklung 82. Zwischen dem Wickelkörper 81 und der Antriebswicklung 82 befinden sich eine erste Sensorwicklung 83 und eine zweite Sensorwicklung 84, die jeweils einlagig gewickelt sind und sich in axialer Richtung über die ganze Länge des Wickelkörpers 81 erstrecken. Die beiden Sensorwicklungen 83, 84 sind koaxial zueinander angeordnet.

Bei einem Durchtritt des Läufers 9 durch den Wickelkörper 81 (siehe Fig. 9) trifft der Läufer 9 auf die erste Sensorwicklung 83. Bevor nun der Läufer 9 mit der Antriebswicklung 82 in Kontakt gerät, wird zuerst die erste Sensorwicklung 83 durchtrennt (siehe Fig. 10). Ebenfalls möglich ist ein Kurzschluss zwischen der ersten 83 und der zweiten 84 Sensorwicklung (siehe Fig. 11). Eine solche Durchtrennung der ersten 83 oder ein Kurzschluss zwischen der ersten 83 und der zweiten 84 Sensorwicklung wird von der Ansteuer- und Kontrollelektronik detektiert und bewirkt ein Ausschalten der Antriebswicklung 82. Der Linearmotor 7 ist zwar dann nicht mehr funktionstüchtig, es wird aber vermieden, dass der Läufer 9 in Berührung mit der Antriebswicklung 72 geraten kann. Eine Durchtrennung der zweiten Sensorwicklung ist zwar in den Fig. 8-11 nicht gezeigt, wird aber ebenfalls von der Ansteuer- und Kontrollelektronik detektiert.

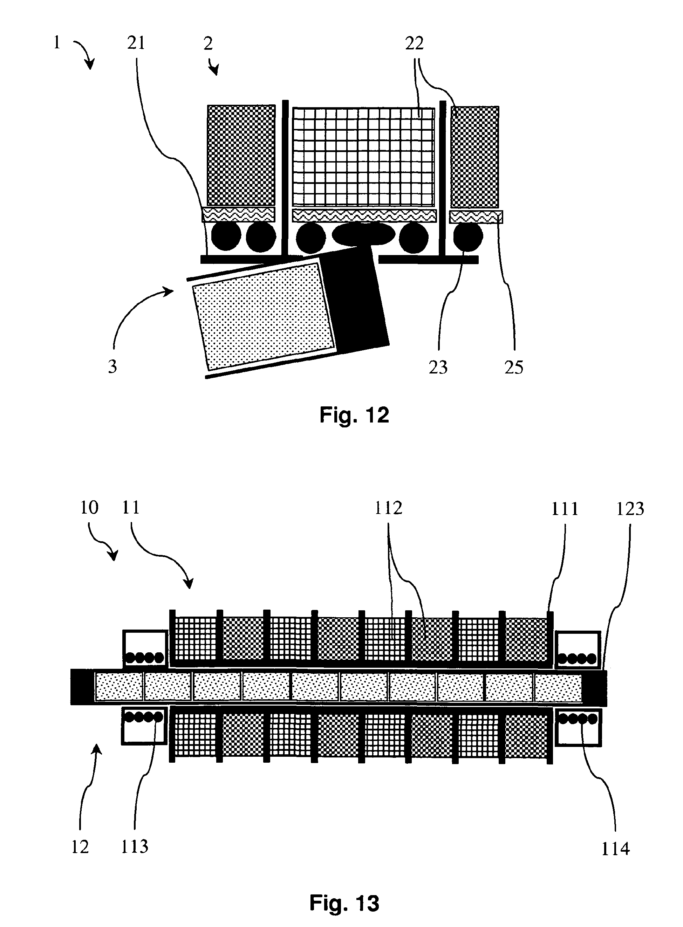

Das in der Fig. 12 dargestellte vierte Ausführungsbeispiel entspricht im Wesentlichen dem Ausführungsbeispiel gemäss Fig. 1. Der signifikante Unterschied dieses Ausführungsbeispiel besteht darin, dass zwischen der Sensorwicklung 23 und der Antriebswicklung 22 eine Schutzschicht 25 gegen mechanische Beschädigung angeordnet ist, die eine zusätzliche Sicherheit der stromführenden Antriebswicklung 22 durch den Läufer 3 bietet und die elektrisch nichtleitend ist.

Die Schutzschicht 25 gegen mechanische Beschädigung kann z. B. eine Isolationsfolie mit einer Schichtdicke von ungefähr 1/10 mm sein. Eine flexible Printplatte mit aufgebrachten Leiterbahnen, z. B. aus Kupfer, ist eine einfache und wenig aufwändige Lösung, um die Schutzschicht 25 gegen mechanische Beschädigung und die Sensorwicklung 23 zu realisieren, wobei Wicklungen der Sensorwicklung 23 z. B. mäanderförmig auf die Printplatte aufgebracht werden können.

Eine Schutzschicht 25 gegen mechanische Beschädigung kann auch beim zweiten Ausführungsbeispiel (siehe Fig. 4-7) und dritten Ausführungsbeispiel (siehe Fig. 8-11) als Ausführungsvariante realisiert werden. Ebenfalls denkbar ist beim zweiten und dritten Ausführungsbeispiel die Verwendung einer flexiblen Printplatte mit aufgebrachten Leiterbahnen.

Bei dem in der Fig. 13 dargestellten fünften Ausführungsbeispiel umfasst der erfindungsgemässe Linearmotor 10 einen Stator 11 und einen Läufer 12. Der Stator 11 umfasst einen Wickelkörper 111 und eine darauf aufgebrachte Antriebswicklung 112. Eine erste Sensorwicklung 113 und eine zweite Sensorwicklung 114 sind jeweils gegenüberliegend ausserhalb des Wickelkörpers 111 angeordnet. Die Sensorwicklungen 113, 114 können auch jeweils zweiadrig ausgeführt werden, um nicht nur Durchtrennungen einer Sensorwicklung, sondern auch einen Kurzschluss zwischen den beiden Adern feststellen zu können.

Der Läufer 12 ist mit Läuferenden 123 versehen. Der maximale Hub des Linearmotors sollte bei diesem Ausführungsbeispiel derart gewählt werden, dass das jeweilige Läuferende 123 in axialer Richtung nicht vollständig durch die zugehörige Sensorwicklung 113, 114 auf den Wickelkörper 111 zu bewegt wird.

Zu den vorbeschriebenen Linearmotoren sind weitere konstruktive Variationen realisierbar. Insbesondere denkbar sind:
- ein Linearmotor ohne Wickelkörper, welcher vergossene Luftspulen mit mindestens einer Sensorwicklung aufweist;
- ein Linearmotor ohne Wickelkörper, bei welchem Pakete mit Antriebswicklungen auf ein Rohr geschoben werden und der mindestens eine Sensorwicklung aufweist; und
- ein Linearmotor mit einer Sensorwicklung in Form einer Beschichtung, welche direkt auf den Wickelkörper aufgetragen wird.

## Patentansprüche

1. Linearmotor (1; 4; 7; 10) mit einem Stator (2; 5; 8; 11), einem Läufer (3; 6; 9; 12), sowie einem Wickelkörper (21; 51; 81; 111) und einer auf dem Wickelkörper (21; 51; 81; 111) angeordneten Antriebswicklung (22; 52; 82; 112), **dadurch gekennzeichnet, dass** der Stator den Wickelkörper mit der darauf angeordneten Antriebswicklung aufweist, und dass mindestens eine Sensorwicklung (23; 53, 54; 83, 84; 113, 114) zum Verhindern eines Kontakts zwischen Antriebswicklung (22; 52; 82; 112) und Läufer (3; 6; 9; 12) bei einem Durchtritt des Läufers (3; 6; 9; 12) durch den Wickelkörper (21; 51; 81; 111) vorhanden ist, die zwischen Wickelkörper (21; 51; 81; 111) und Antriebswicklung (22; 52; 82; 112) angeordnet ist.

2. Linearmotor (1) nach Anspruch 1, **dadurch gekennzeichnet, dass** die mindestens eine Sensorwicklung genau eine Sensorwicklung (23) umfasst, welche einlagig gewickelt ist und sich in axialer Richtung erstreckt.

3. Linearmotor (4) nach Anspruch 1, **dadurch gekennzeichnet, dass** die mindestens eine Sensorwicklung eine erste (53) und eine zweite (54) Sensorwicklung umfasst, wobei die erste (53) und die zweite (54) Sensorwicklung jeweils einlagig gewickelt ist und sich in axialer Richtung erstreckt, und wobei die Wicklungsdrähte der ersten (53) und zweiten (54) Sensorwicklung in axialer Richtung alternierend angeordnet sind.

4. Linearmotor (7) nach Anspruch 1, **dadurch gekennzeichnet, dass** die mindestens eine Sensorwicklung eine erste (83) und eine zweite (84) Sensorwicklung umfasst, wobei die erste (83) und die zweite (84) Sensorwicklung jeweils einlagig gewickelt ist und sich in axialer Richtung erstreckt, und wobei die beiden Sensorwicklungen (83, 84) koaxial zueinander angeordnet sind.

5. Linearmotor (1; 4; 7; 10) nach einem der Ansprüche 1 bis 4, **dadurch gekennzeichnet, dass** zwischen der mindestens einen Sensorwicklung (23; 53, 54; 83, 84; 113, 114) und der Antriebswicklung (22; 52; 82; 112) eine Schutzschicht (25) gegen mechanische Beschädigung der Antriebswicklung (22; 52; 82; 112) angeordnet ist.

6. Linearmotor (1; 4; 7; 10) nach Anspruch 5, **dadurch gekennzeichnet, dass** die Schutzschicht (25) eine flexible Printplatte umfasst, auf der die mindestens eine Sensorwicklung (23; 53, 54; 83, 84; 113, 114) aufgebracht ist.

7. Linearmotor (1; 4; 7; 10) nach Anspruch 6, **dadurch gekennzeichnet, dass** die mindestens eine Sensorwicklung (23; 53, 54; 83, 84; 113, 114) in Form von Leiterbahnen auf der flexiblen Printplatte angeordnet ist.

8. Linearmotor (1; 4; 7; 10) nach einem der Ansprüche 1 bis 7, **dadurch gekennzeichnet, dass** der Läufer (3; 6; 9; 12) ein Innenläufer ist.

9. Linearmotor (10) nach einem der Ansprüche 1 bis 8, **dadurch gekennzeichnet, dass** die mindestens eine Sensorwicklung eine erste (113) und eine zweite (114) Sensorwicklung umfasst, wobei die erste (113) und die zweite (114) Sensorwicklung axial gegenüberliegend ausserhalb des Wickelkörpers (111) angeordnet sind.

## Claims

1. Linear motor (1; 4; 7; 10) comprising a stator (2; 5; 8; 11), an armature (3; 6; 9; 12), as well as a winding reel (21; 51; 81; 111) and a drive winding (22; 52; 82; 112) arranged on the winding reel (21; 51; 81; 111), **characterized in that** the stator comprises the winding reel with the drive winding arranged thereon, and that at least one sensor winding (23; 53, 54; 83, 84; 113, 114) is provided to prevent a contact of the drive winding (22; 52; 82; 112) and the armature (3; 6; 9; 12) upon a passing through of the armature (3; 6; 9; 12) through the winding reel (21; 51; 81; 111), the sensor winding being arranged between the winding reel (21; 51; 81; 111) and the drive winding (22; 52; 82; 112).

2. Linear motor (1) according to claim 1, **characterized in that** the at least one sensor winding comprises exactly one sensor winding (23), which is wound in a single layer and which extends in axial direction.

3. Linear motor (4) according to claim 1, **characterized in that** the at least one sensor winding comprises a first (53) and a second (54) sensor winding, wherein the first (53) and the second (54) sensor winding are each wound in a single layer and extend in axial direction, and wherein the winding wires of the first (53) and second (54) sensor winding are arranged alternatingly in axial direction.

4. Linear motor (7) according to claim 1, **characterized in that** the at least one sensor winding comprises a first (83) and a second (84) sensor winding, wherein the first (83) and the second (84) sensor winding are each wound in a single layer and extend in axial direction, and wherein both sensor windings (83, 84) are arranged coaxially relative to one another.

5. Linear motor (1; 4; 7; 10) according to any one of claims 1 to 4, **characterized in that** between the at least one sensor winding (23; 53, 54; 83, 84; 113, 114) and the drive winding (22; 52; 82; 112) a protective layer (25) is arranged against mechanical damage of the drive winding (22; 52; 82; 112).

6. Linear motor (1; 4; 7; 10) according to claim 5, **characterized in that** the protective layer (25) comprises a flexible printed circuit plate on which the at least one sensor winding (23; 53, 54; 83, 84; 113, 114) is applied.

7. Linear motor (1; 4; 7; 10) according to claim 6, **characterized in that** the at least one sensor winding (23; 53, 54; 83, 84; 113, 114) is arranged on the flexible printed circuit plate in the form of conductor paths.

8. Linear motor (1; 4; 7; 10) according to any one of claims 1 to 7, **characterized in that** the armature (3; 6; 9; 12) is an internal armature.

9. Linear motor (10) according to any one of claims 1 to 8, **characterized in that** the at least one sensor winding comprises a first (113) and a second (114) sensor winding, wherein the first (113) and the second (114) sensor winding are arranged axially opposite to one another and off the winding reel (111).

## Revendications

1. Moteur linéaire (1 ; 4 ; 7 ; 10) comprenant un stator (2 ; 5 ; 8 ; 11), un induit (3 ; 6 ; 9 ; 12), ainsi qu'un corps bobiné (21 ; 51 ; 81 ; 111) et un bobinage moteur (22 ; 52 ; 82 ; 112) agencé sur le corps bobiné (21 ; 51 ; 81 ; 111),
**caractérisé en ce que** le stator comprend le corps bobiné avec le bobinage moteur agencé sur celui-ci, et **en ce qu'**il est prévu au moins un bobinage détecteur (23 ; 53, 54 ; 83, 84 ; 113, 114) pour empêcher un contact entre le bobinage moteur (22 ; 52 ; 82 ; 112) et l'induit (3 ; 6 ; 9 ; 12) lors d'un passage de l'induit (3 ; 6 ; 9 ; 12) à travers le corps bobiné (21 ; 51 ; 81 ; 111), qui est agencé entre le corps bobiné (21 ; 51 ; 81 ; 111) et le bobinage moteur (22 ; 52 ; 82 ; 112).

2. Moteur linéaire (1) selon la revendication 1,
**caractérisé en ce que** ledit au moins un bobinage détecteur comprend exactement un bobinage détecteur (23), qui est bobiné sur une couche et qui s'étend en direction axiale.

3. Moteur linéaire (4) selon la revendication 1,
**caractérisé en ce que** ledit au moins un bobinage détecteur comprend un premier (53) et un second (54) bobinage détecteur, tels que le premier (53) et le second (54) bobinage détecteur sont respectivement bobinés sur une couche et s'étendent en direction axiale, et tels que les fils du premier (53) et du second (54) bobinage détecteur sont agencés en alternance en direction axiale.

4. Moteur linéaire (7) selon la revendication 1,
**caractérisé en ce que** ledit au moins un bobinage détecteur comprend un premier (83) et un second (84) bobinage détecteur, tels que le premier (83) et le second (84) bobinage détecteur sont respectivement bobinés sur une couche et s'étendent en direction axiale, et tels que les deux bobinages détecteurs (83, 84) sont agencés coaxialement l'un par rapport à l'autre.

5. Moteur linéaire (1 ; 4 ; 7 ; 10) selon l'une des revendications 1 à 4, **caractérisé en ce qu'**une couche protectrice (25) contre des endommagements mécaniques du bobinage moteur (22 ; 52 ; 82 ; 112) est agencée entre ledit au moins un bobinage détecteur (23 ; 53, 54 ; 83, 84 ; 113, 114) et le bobinage moteur (22 ; 52 ; 82 ; 112).

6. Moteur linéaire (1 ; 4 ; 7 ; 10) selon la revendication 5, **caractérisé en ce que** la couche protectrice (25) comprend une plaque à circuits imprimés flexible, sur laquelle est appliqué ledit au moins un bobinage détecteur (23 ; 53, 54 ; 83, 84 ; 113, 114).

7. Moteur linéaire (1 ; 4 ; 7 ; 10) selon la revendication 6, **caractérisé en ce que** ledit au moins un bobinage détecteur (23 ; 53, 54 ; 83, 84 ; 113, 114) est agencé sur la plaque à circuits imprimés flexible sous forme de pistes conductrices.

8. Moteur linéaire (1 ; 4 ; 7 ; 10) selon l'une des revendications 1 à 7, **caractérisé en ce que** l'induit (3 ; 6 ; 9 ; 12) est un induit intérieur.

9. Moteur linéaire (10) selon l'une des revendications 1 à 8, **caractérisé en ce que** ledit au moins un bobinage détecteur comprend un premier (113) et un second (114) bobinage détecteur, tels que le premier (113) et le second (114) bobinage détecteur sont agencés axialement opposés à l'extérieur du corps bobiné (111).
